# EUROPEAN PATENT APPLICATION

(11) **EP 2 738 729 A1**
(43) Date of publication of application: **04.06.2014**
(21) Application number: 13194487.8
(22) Date of filing: 26.11.2013
(51) Int. Cl.: G06Q 30/02

(54) **Targeted information items in mobile applications**

(30) Priority: 29.11.2012 US 201213689160
(71) Applicant: Facebook, Inc., Menlo Park, CA 94025 (US)
(72) Inventor: Mathur, Nipun, Menlo Park, CA 94025 (US); Rajaram, Gokul, Menlo Park, CA 94025 (US); Shepard, Luke Jonathan, Menlo Park, CA 94025 (US)
(74) Representative: Schröer, Gernot H.

(57) **Abstract**

A social networking system enables targeted advertising to its users on mobile devices, either directly in third-party applications or via an ad exchange. An application on the mobile device associated with the social networking system stores user identifying information in a shared memory location on the user's mobile device. To deliver a targeted ad to the user on the mobile device, an application executed by the mobile device retrieves the user identifying information, which is transmitted to an ad server associated with the social networking system or to the social networking system. Based on the user's profile in the social networking system, an advertisement is selected for the user (e.g., using targeting criteria and an auction model) and sent to an ad exchange or to the application on the mobile device for presentation to the user on the mobile device.

## Description

### TECHNICAL FIELD

The present disclosure relates to the displaying of information, and in particular to targeting information items in mobile applications based on user identification information from a mobile device.

### BACKGROUND

Advertisement revenue provides an important revenue stream for social networking systems. Targeting advertisements to particular social networking system users typically generates greater advertisement revenue for advertisers compared to broad-based ads because users typically perceive targeted advertisements as more relevant. By serving more relevant information items, in particular relevant ads, advertisers increase the conversion rate of viewers of the ads to purchasers of the proposed goods or services, benefitting both the advertiser and the social networking system.

To improve an advertisement's relevance, advertisers use consumer data, such as websites visited or content viewed. However, this approach often fails to provide insight into other dynamics that can affect a consumer's purchasing decision, online or otherwise. If limited to accessing a user's individual online purchasing activity, advertisers are unable to improve the relevance of their advertisements by leveraging other dynamics affecting a user's purchasing decision process.

Additionally, native applications on mobile devices do not maintain cookies or provide similar functionality for tracking and analyzing a user's activity on the mobile device. Even if a web browser on a mobile device maintains cookie tracking a user's browsing history, conventional native applications on the mobile device are unable to access these cookies, limiting the information available to the native applications. This inhibits native applications on a mobile device from delivering advertisements customized for a user.

### SUMMARY

Embodiments of the present disclosure enable a client application on a mobile device to request an advertisement from a social networking system, and to present advertisements received from the social networking system that are targeted to a user. A social networking application executing on the mobile device stores user identification information in a shared memory location. A client application executing on the mobile device retrieves the user identification information from the shared memory location and transmits the user identification information to the social networking system. Based on a user profile of the user corresponding to the user identification information, the social networking system identifies an advertisement targeted to the use and provides the identified advertisement to the mobile device for presentation.

To provide a targeted advertisement to a client application running on a mobile device, a social networking system receives a request for an advertisement from the mobile device that includes user identification information. In one embodiment, the request for an advertisement, including the user identification information, is sent to an advertising exchange. The client application retrieves the user identification information, which is provided by a social networking application executing on the mobile device, from a shared memory location of the mobile device. For example, the user identification information is information used by the social networking application to retrieve information associated with a specified user from a social networking system. By storing the user identification information in a shared memory location of the mobile device, the social networking application allows the client applications, and other applications, to access the user identification information. The user identification information is transmitted from the mobile device to the social networking system, which identifies a user profile associated with the user identification information. This allows advertisements to be selected for presentation via the client application based on user information stored by the social networking system.

Based on information in the identified user profile, the social networking system retrieves one or more candidate advertisements, which are associated with one or more targeting criteria satisfied by information in the identified user profile. In various other embodiments, any publishing system or advertisement provider may retrieve or select candidate advertisements based on information determined from the user identification information. Each candidate advertisement is also associated with a bid amount that identifies the compensation received by the social networking system if the candidate advertisement is presented to the user or if the candidate advertisement is accessed by the user. From the bid amounts, the social networking system computes an expected value for each candidate advertisement and ranks the candidate advertisements using the expected values. Based on the ranking, an advertisement is selected and presented to the user by the mobile device.

In some embodiments, the social networking system includes social context information in the selected advertisement before communicating the selected advertisement to the social networking system. The social context information may identify actions performed by other users of the social networking system connected to the user. For example, an action by a user connected to the user involving content associated with the selected advertisement is identified and embedded in the selected advertisement.

Embodiments according to the invention are in particular disclosed in the attached claims directed to a method, a storage medium and a system, wherein any feature mentioned in one claim category, e.g. method, can be claimed in another claim category, e.g. system, as well.

In an embodiment of the invention, a method comprises:
retrieving, by an application running on a mobile device, user identification information from a local memory on the mobile device, the user identification information provided to the local memory by a social networking system application operating on the mobile device and associated with a social networking system, the user identification information associated with a user of the social networking system and used by the social networking application to retrieve information associated with the user;
sending a request for one or more information items to the social networking system, the request including the user identification information associated with the user; and
receiving one or more information items selected by the social networking system based at least in part on targeting criteria associated with information items stored by the social networking system and information about the user stored by the social networking system, the selected information items associated with one or more targeting criteria satisfied by the information about the user stored by the social networking system.

The user identification information can include at least one request parameter for filtering candidate information items identified by the social networking system.

A request parameter can be selected from a group consisting of: a parameter that a candidate information item has not been previously provided to the client application, a specified size of the candidate information item, a threshold number of times the candidate information item has been provided to the application, a threshold expected value associated with the candidate information item, content of the candidate information item, and any combination thereof.

Displaying the information item selected by the social networking system on the mobile device can be done by using the application running on the mobile device.

The information item selected by the social networking system can include social context information associated with the user if the user is logged into the social networking system.

The social context information associated with the user can comprise an action performed by another user of the social networking system connected to the user, the action involving an object associated with the information item selected by the social networking system.

The information about the user stored by the social networking system can include whether the user has previously viewed content associated with the received information item, preferably representing an user affinity, and the received information item is related to the viewed content.

The information item can be at least one of the following: an advertisement; an emergency message; a product recall message.

The information about the user stored by the social networking system can include data indicating an association between the user and a supplier of the information item, in particular an advertiser, associated with the received information item, in particular an advertisement.

In a further embodiment of the invention one or more computer-readable non-transitory storage media embody software that is operable when executed to perform a method according to according to the invention or any of the above mentioned embodiments.

In a further embodiment of the invention a system comprises: one or more processors; and a memory coupled to the processors comprising instructions executable by the processors, the processors operable when executing the instructions to perform a method according to the invention or any of the above mentioned embodiments.

In a further embodiment according to the invention, which can be claimed as well, a method comprises:
retrieving, by an application running on a mobile device, user identification information from a local memory on the mobile device, the user identification information provided to the local memory by a social networking system application operating on the mobile device and associated with a social networking system, the user identification information associated with a user of the social networking system and used by the social networking application to retrieve information associated with the user;
sending a request for an advertisement to the social networking system, the request including the user identification information associated with the user; and
receiving an advertisement selected by the social networking system based at least in part on targeting criteria associated with advertisements stored by the social networking system and information about the user stored by the social networking system, the selected advertisement associated with one or more targeting criteria satisfied by the information about the user stored by the social networking system.

The user identification information can include at least one request parameter for filtering candidate advertisements identified by the social networking system.

A request parameter can be selected from a group consisting of: a parameter that a candidate advertisement has not been previously provided to the client application, a specified size of the candidate advertisement, a threshold number of times the candidate advertisement has been provided to the application, a threshold expected value associated with the candidate advertisement, content of the candidate advertisement, and any combination thereof.

The advertisement selected by the social networking system can be displayed on the mobile device using the application running on the mobile device.

The advertisement can be selected by the social networking system includes social context information associated with the user if the user is logged into the social networking system.

The social context information associated with the user can comprise an action performed by another user of the social networking system connected to the user, the action involving an object associated with the advertisement selected by the social networking system.

The information about the user stored by the social networking system can include whether the user has previously viewed content associated with the received advertisement and the received advertisement is related to the viewed content.

The information about the user stored by the social networking system further can include data indicating an association between the user and an advertiser associated with the received advertisement.

In another embodiment, which can be claimed as well, a method comprises:
receiving a request for an advertisement from an application operating on a mobile device, the request including user identification information associated with a user of a social networking system and provided by a social networking application operating on the mobile device and associated with the social networking system;
identifying a user profile of a user associated with user identification information, the user profile maintained by a social networking system;
retrieving one or more candidate advertisements, each candidate targeted advertisement is associated with a bid amount and at least one targeting criteria satisfied by the user profile of the user;
selecting an advertisement from the candidate advertisements based at least in part on the bid amounts of the candidate advertisements; and
providing the selected advertisement to the mobile device for presentation to the user via the application.

Providing the selected targeted advertisement can comprise:
determining social context information associated with the user if the user is logged into the social networking system;
embedding the social context information into the selected advertisement; and
providing the selected advertisement including the social context information to the mobile device.

The social context information associated with the user can comprise an action performed by another user of the social networking system connected to the user, the action involving an object associated with the selected advertisement.

Selecting an advertisement from the candidate advertisements, based at least in part on the bid amounts of the candidate advertisements, can comprise:
determining a bid amount associated with each of the candidate advertisements based on a probability of the user accessing a candidate advertisement and the bid amount of the candidate advertisement; and
selecting an advertisement associated with a highest bid amount.

The probability of the user accessing the candidate advertisement can be based at least in part on an affinity of the user for an object associated with the candidate advertisement.

The user identification information can include at least one request parameter for filtering candidate advertisements.

A request parameter can be selected from a group consisting of: a parameter that a candidate advertisement has not been previously provided to the client application, a specified size of the candidate advertisement, a threshold number of times the candidate advertisement has been provided to the application, a threshold expected value associated with the candidate advertisement, content of the candidate advertisement, and any combination thereof.

The user identification information can include information describing a plurality of users.

Selecting the advertisement from the candidate advertisements can comprise:
retrieving data associated with the user profile identifying content accessed by the user;
determining advertisers associated with the identified content accessed by the user; and
selecting the advertisement based at least in part on the bid amounts of the candidate advertisements and whether the user accessed content associated with an advertiser associated with a candidate advertisement.

Further selecting the advertisement from the candidate advertisements can comprise:
retrieving data associated with the user profile identifying connections between the user and one or more advertisers; and
selecting the advertisement based at least in part on the bid amounts of the candidate advertisements and whether the user has a connection with an advertiser associated with a candidate advertisement.

In a further embodiment of the invention, which can be claimed as well, a computer-readable storage medium having executable computer program instructions embodied thereon, the instructions, when executed by a processor, cause the processor to:
retrieve, by an application running on a device including the processor, user identification information from a local memory on the device, the user identification information provided to the local memory by a social networking system application operating on the device and associated with a social networking system, the user identification information associated with a user of the social networking system and used by the social networking application to retrieve information associated with the user;
sending a request for an advertisement to the social networking system, the request including the user identification information associated with the user; and
receiving an advertisement selected by the social networking system based at least in part on targeting criteria associated with advertisements stored by the social networking system and information about the user stored by the social networking system, the selected advertisement associated with one or more targeting criteria satisfied by the information about the user stored by the social networking system.

### BRIEF DESCRIPTION OF THE DRAWINGS

- FIG. 1A: illustrates a block diagram of a system environment for retrieving advertisements targeted to a mobile device user using the user's association with a social network, in accordance with an embodiment.
- FIG. 1B: illustrates an example display of an active client application on a mobile device presenting an advertisement selected for a user, in accordance with an embodiment.
- FIG. 2: illustrates a block diagram of a system environment for serving an advertisement to users of a social network, in accordance with an embodiment.
- FIG. 3: is an example block diagram of a system architecture of a social networking system, in accordance with an embodiment.
- FIG. 4: illustrates a flowchart of a process for retrieving a targeted advertisement from a social networking system using a mobile device, in accordance with an embodiment.
- FIG. 5: illustrates a flowchart of a process for selecting an advertisement for presentation to a social networking system user via a mobile device, in accordance with an embodiment.

The figures depict various embodiments of the present disclosure for purposes of illustration only. One skilled in the art will readily recognize from the following discussion that alternative embodiments of the structures and methods illustrated herein may be employed without departing from the principles of the embodiments described herein.

### DETAILED DESCRIPTION

### Overview

The detailed description of the drawings is also aimed in particular at the information item example of advertisements; however this of course does not exclude any other possible information item content.

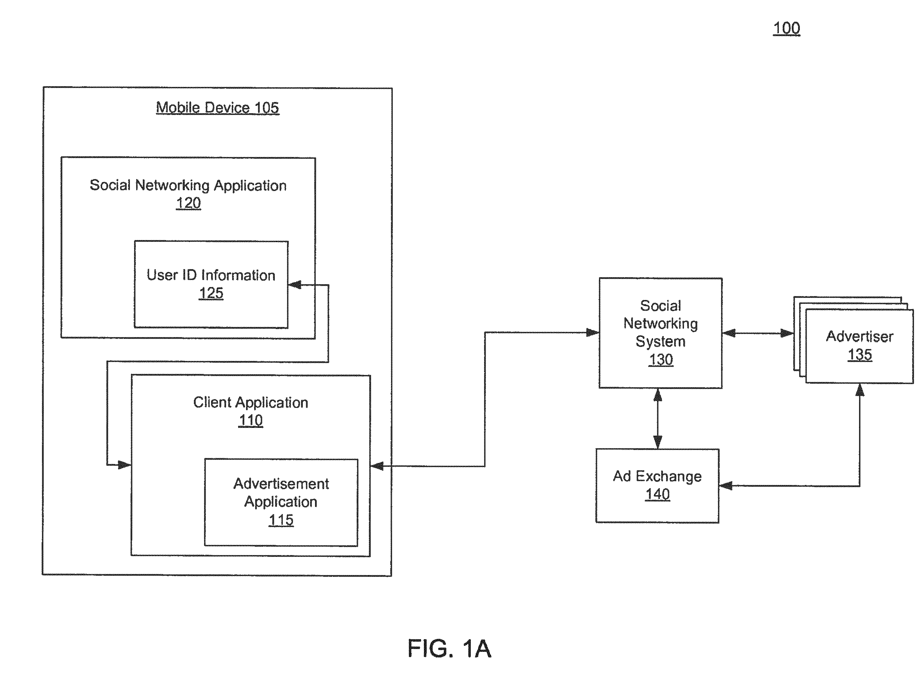

FIG. 1A is a block diagram of system environment 100 for using a mobile device user's association with a social networking system to retrieve advertisements targeted to the user. The system environment 100 shown by FIG. 1A includes a mobile device 105 including a client application 110. The client application 110 may be any application presenting content to a user of the mobile device 105. Content presented by the client application 110 may include one or more advertisements. For example, the client application 110 is a news application displaying news and advertisements to a mobile device user.

To provide advertisements, the client application 110 includes an advertisement application 115 that retrieves advertisements to be presented to the user. Advertisements which are associated with a user profile or with a group of user profiles are known as targeted advertisements. The advertisement application 115 retrieves user identification ("ID") information 125 for the user stored on the mobile device 105. In one embodiment, user ID information 125 is associated with a social networking application 120 included on the mobile device 105. For example, user ID information 125 includes a user identifier uniquely associating the user with a user profile within a social networking system 130. The user ID information 125 may be stored in a shared memory location of the mobile device 105 to more readily allow the social networking application 120 and the advertisement application 115 to access the user ID information 125. Alternatively, when a user logs into the social networking system 130 using the social networking application 120, the social networking application retrieves the user ID information 125 from the social networking system 130. The user ID information 125 is then stored in the shared memory location.

The advertisement application 115 sends a request for an advertisement to a social networking system 130 that includes the user ID information 125. In some embodiments the request for an advertisement may additionally include one or more request parameters. Request parameters are conditions which the social networking system 130 may use to limit advertisements provided to the client application 110. For example, a request parameter causes the social networking system 130 to select advertisements that have not been previously displayed to the user.

In alternate embodiments, the user ID information 125 is encrypted before being stored in the shared memory location. The user ID information 125 may be encrypted by the social networking system 130 using for example, a hash function, or some other form of encryption. The encrypted user ID information 125 may then be provided to the mobile device 105 for storage in the shared memory location. In this embodiment, the advertisement application 115 would retrieve the encrypted user ID information 125 from the shared memory location and send a request for an advertisement to a social networking system 130 that includes the encrypted user ID information 125.

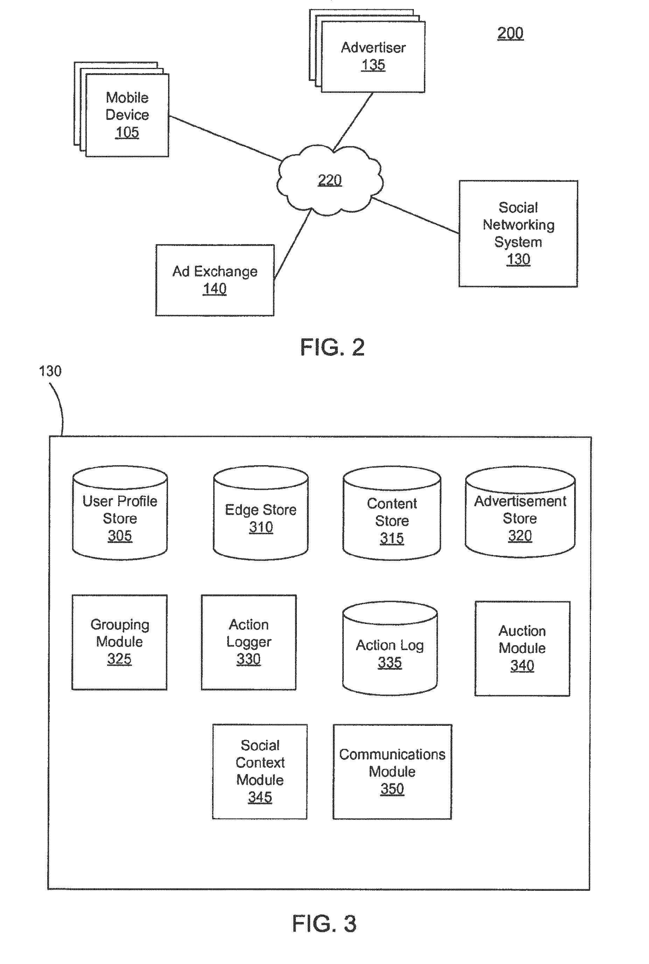

The social networking system 130, further described below in conjunction with FIG. 3, selects one or more advertisements using the user ID information 125 and any additional request parameters from the requests for advertisements. One or more of the selected advertisements are provided to the client application 110 by the social networking system 130. In some embodiments, the social networking system 130 embeds social context information within a selected advertisement if the user identified by a request for an advertisement is presently logged into social networking system 130, via, a social networking application 120, a browser located on mobile device 105, or any other suitable mechanism.

The social networking system 130 selects the advertisement from one or more candidate advertisements, which are each associated with at least one advertisement ("ad") object. An ad object includes an advertisement and an associated bid price. An advertisement generally includes any communication intended to cause the recipient of the communication to take some action concerning a product or service. For example, an advertisement includes an offer for a deal.

One or more advertisers 135 provide ad objects to social networking system 130. In some embodiments, an advertiser 135 provides the ad object directly to the social networking system 130. Alternatively, an advertiser 135 may provide the ad object to social networking system 130 indirectly by using an ad network or an ad exchange 140. Additionally, in some embodiments, the social networking system 130 may create its own inventory of ad objects. In some embodiments, the inventory may also include links to other users of the social networking system 130 that are connected to the user.

Ad objects may also include targeting criteria that specifies characteristics of social networking system users to receive a particular advertisement. An advertiser 135 may provide an ad object without targeting criteria. If no targeting criteria are provided, the social networking system 130 may analyze the content of the ad object to infer a targeting criteria based on a fuzzy matching algorithm that may use the types of interactions performed by users, user characteristics, and/or types of connections between users in the group as characteristics.

Social networking system 130, as further described below, maintains user profiles, edge objects, and content objects to provide information about its users. These user profile objects, edge objects, and content objects may be analyzed to identify users matching one or more targeting criteria of an advertisement. For example, groups of users having a common characteristic satisfying one or more targeting criteria are identified by social networking system 130. One or more targeted advertisements are associated with users matching one or more targeting criteria. For example, the social networking system 130 associates one or more archery-related advertisements with users matching one or more targeting criteria of the archery-related advertisements. For example, the social networking system generates a group of users matching one or more targeting criteria using user identifiers associated with the users in the group; thus, based on a user identifier, the targeting criteria matched by a group of users may be associated with user identifiers of users matching the targeting criteria, allowing more efficient identification of targeting criteria matched by an identified user. Alternatively, targeting criteria matched by a user are associated with the user, allowing retrieval of the user's matching targeting criteria based on a received user identifier.

The social networking system 130 extracts the user identifier from the received user ID information 125 and determines one or more targeting criteria satisfied by the corresponding user. In embodiments, where the user ID information 125 is encrypted, the social networking system 130 first decrypts the encrypted user ID information 125 using for example a hash table, or some other decryption method before extracting the user identifier. Based on the targeting criteria, the social networking system 130 identifies one or more candidate advertisements for the identified user. Any request parameters associated with the targeted request for an advertisement are extracted and applied by the social networking system 130 to filter the pool of candidate advertisements. For example, if a request parameter dictates that the targeted advertisement has not been previously provided to client application 110, social networking system 130 removes previously presented advertisements from the candidate advertisements.

From the candidate advertisements, the social networking system 130 selects an advertisement associated with one or more targeting criteria satisfied by the user identified from the received user ID information 125. For example, an advertisement associated with a user identifier included in a group of user identifiers matching targeting criteria is selected. As another example, the social networking system 130 performs an auction based on the expected value of each of the candidate advertisements and selects the advertisement based on the auction. An internal auction, an external auction, or both may be used by the social networking system 130 to select a targeted advertisement to provide to client application 110. In some embodiments, the user social networking system 130 limits the candidate advertisements included in the objects. For example, other information about the user or users connected to the user is used to select a subset of the candidate advertisements included in the auction. Alternatively, the candidate advertisements included in the auction are not limited.

In some embodiments, the social networking system 130, or another advertising provider, may select of the advertisement based on information about the user stored by the social networking system 130. For example, information about the user maintained by the social networking system 130 indicates that the user has previously viewed content from, or is associated with (e.g., a connection exists in the social networking system between the user and the advertiser), the candidate target advertisements' advertisers. This information may increase the likelihood that the advertisement selected is from an advertiser with which the user has previously interacted, allowing advertisements to be retargeted based on content viewed by the user via the mobile device 105.

In some embodiments, the social networking system 130 may also embed social context information into a selected advertisement. To embed social context information, the social networking system 130 determines whether the user is logged into the social networking system 130 via a social networking application 120 on mobile device 105, a browser operating on mobile device 105, etc. If the user is logged onto the social networking system 130, the social networking system 130 may embed social context information associated with the user into the selected advertisement. Social context information identifies actions with the advertisement or with objects associated with the advertisement by other users of the social networking system 130 connected to the user of the mobile device 105. For example, if user X is connected to users Y and Z, and user Y is has expressed a preference for a page in the social networking system 130 associated with a product in a selected advertisement, the selected advertisement is modified to include social context information that "user Y likes this product" when delivered to user X.

The social networking system 130 then provides the selected advertisement to the client application 110, which presents the selected advertisement to the user along with any embedded social context. For example, the client application 110 displays the selected advertisement to the user, plays audio associated with the selected advertisement for the user, or otherwise presents the selected advertisement to the user.

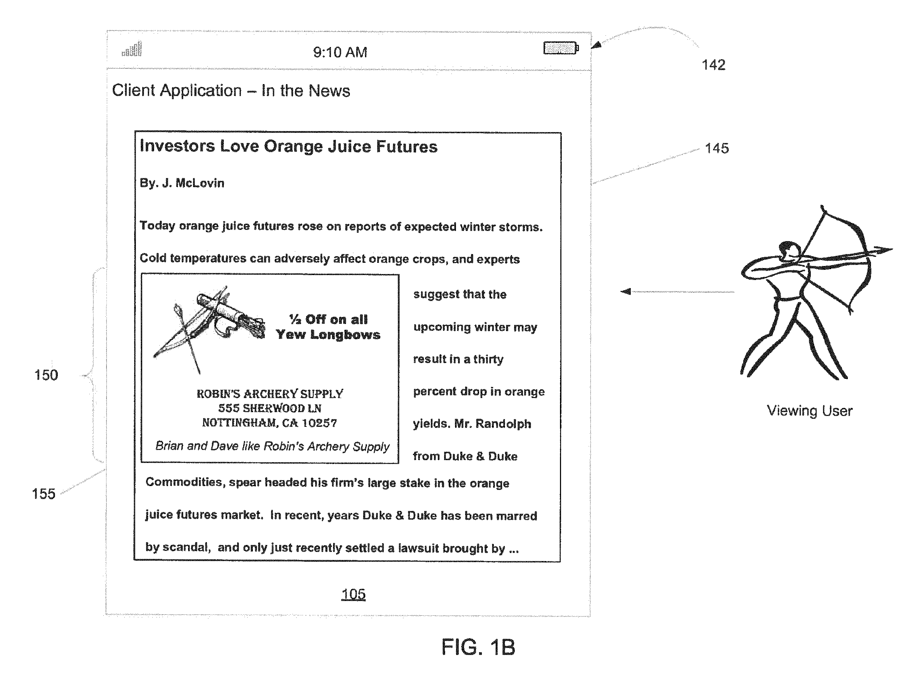

FIG. 1B illustrates an example display 142 of an active client application 110 on mobile device 105 presenting a selected advertisement 150 to the user. As used herein, an "active application" is an application that is currently presenting content to the user. In the example of FIG. 1B, the client application 110 is a news application delivering client content 145 to the user, and the selected advertisement 150 is embedded within content presented by the display 145. However, in other embodiments, the selected advertisement 150 may be presented in a separate display, such as a pop up window, a banner, etc. In FIG. 1B, the social networking system 130 determined that the user satisfies one or more targeting criteria identifying users with an interest in archery; hence, the selected advertisement 150 is related to archery.

Additionally, in the example of FIG. 1B, the social networking system 130 determined that the user was logged into social networking system 130 when the selected advertisement is requested. Hence, the selected advertisement 150 in FIG. 1B includes social context information 155.

### System Architecture

FIG. 2 illustrates a block diagram of a system environment 200 for serving an advertisement to users of the social network. The system environment 200 includes one or more mobile devices 105 coupled to the social networking system 130, to one or more advertisers 135, and to an advertisement ("ad") exchange 140 via a network 220. In various embodiments, the system environment 200 may be organized in an alternative topology or configuration, and include different and/or additional modules.

The advertisers 135 provide ad objects to entities in system environment 200, and one or more of the ad objects are selected for presentation to a user of mobile device 105. The ad exchange 140 facilitates bidding, buying, selling, or some combination thereof, of ad objects from advertisers 135 to systems facilitating delivery of advertisements associated with the ad objects to their intended audience (e.g., all users, targeted to particular groups, etc.).

The mobile devices 105 comprise one or more computing devices capable of receiving user input as well as transmitting and/or receiving data via the network 220. Examples of a mobile device 105 include a personal digital assistant (PDA), a mobile telephone, a smart-phone or other devices operating without using cookies describing user actions. Mobile devices 105 may be equipped for cellular communication, Wi-Fi communications, or both.

As discussed above, each mobile device 105 includes the social networking application 120 and the client application 110. The social networking application 120 allows a social networking system user to exchange data with the social networking system 130 via a mobile device 105 and the network 220. User identification (ID) information for each user of a mobile device 105 previously accessing the social networking system 130 via the social networking application 120 is stored in a shared memory location on the mobile device 105. In some embodiments, when the user logs into the social networking system 130 using the social networking application 120, the social networking application 120 retrieves the user ID information 125 from the social networking system 130 and stores the user ID information 125 in the shared memory location. As discussed above in conjunction with FIG. 1, in some embodiments the user ID information 125 may be encrypted by the social networking system 130 prior to being stored in the shared memory location.

The client application 110 may be any application capable of presenting content to the mobile device user and is configured to present advertisements in conjunction with client content. For example, client application 110 may be a news application that displays advertisements to the user along with news content. Additionally, client applications 110 may differ across different mobile devices 105. For example, the client application 110 may be a news application on a mobile device 105 and may be a weather application on a separate mobile device 105.

As discussed above in conjunction with FIG. 1A, a client application 110 includes an advertisement application 115 that sends requests for advertisements to the social networking system 130. The advertisement application 115 retrieves the user ID information 125 associated with the social networking application 120 that is stored in a shared memory location of the mobile device 105. Alternatively, the advertisement application 115 causes the client application 110 to retrieve the user ID information 125 from the shared memory location. By storing the user ID information 125 in a shared memory location, the social networking application 120 allows other applications, such as the client application 110, to identify a social networking system user operating the mobile device 105. This allows the other applications to provide advertisements that are based on information maintained by the social networking system 130 about the user corresponding to the user ID information 125. In embodiments where the user ID information 125 is associated with multiple users, the advertisement application 115 may select components of the user ID information 125 that are associated with one or more users. Using the user ID information 125, the advertisement application 115 sends a request for an advertisement including the user ID information 125 to the social networking system 130. The advertisement application 115 receives an advertisement selected by the social networking system 130, and the advertisement application 115 communicates with the client application 110 to display the received advertisement. In some embodiments, the advertisement application 115 may be created using a software development kit (SDK). The social networking system 130 may make available the SDK software to software developers. And in some instances, the social networking system 130 may charge a fee for use of the SDK software.

The mobile devices 105 are configured to communicate via network 220. A mobile device 105 may execute an application (e.g., client application 110, social networking application 120, etc.) that interacts with the social networking system 130 through an application programming interface (API) running on the native operating system of the mobile device 105, such as IOS® and ANDROID™. Additionally, the advertisement application 115 may allow interactions between the client application 110 and the social networking system 130 and/or the social networking application 120. In some embodiments, the mobile device 105 executes an application allowing a user of the mobile device 105 to receive an advertisement from the social networking system 130 or to otherwise interact with the social networking system 130.

In one embodiment, network 220 uses standard communications technologies and/or protocols. Thus, network 220 may include wired and/or wireless links using technologies such as Ethernet, 802.11 family of standards, worldwide interoperability for microwave access (WiMAX), 3G, 4G, CDMA, digital subscriber line (DSL), etc. Examples of networking protocols used on the network 220 include multiprotocol label switching (MPLS), the transmission control protocol/Internet protocol (TCP/IP), the User Datagram Protocol (UDP), the hypertext transport protocol (HTTP), the simple mail transfer protocol (SMTP), and the file transfer protocol (FTP). The data exchanged over the network 220 can be represented using technologies and/or formats including the hypertext markup language (HTML) and the extensible markup language (XML). In addition, all or some of links can be encrypted using conventional encryption technologies such as secure sockets layer (SSL), transport layer security (TLS), and Internet Protocol security (IPsec).

FIG. 3 is an example block diagram of a system architecture of the social networking system 130. The social networking system 130 includes a user profile store 305, an edge store 310, a content store 315, an advertisement store 320, a grouping module 325, an action logger 330, an action log 335, an auction module 340, a social context module 345, and a communications module 350. In other embodiments, the social networking system 130 may include additional, fewer, or different modules for various applications. Conventional components such as network interfaces, security functions, load balancers, fail-over servers, management and network operations consoles, and the like are not shown so as to not obscure the details of the system architecture.

User account information and other related information for users are stored as user profile objects in user profile store 305. For example, each user of the social networking system 130 has an associated user identifier that is unique to the user and is part of their user account information. The user identifier is stored in a user profile maintained by the user profile store 305. The user profile information stored in user profile store 305 also describes the users of the social networking system 130, including biographic, demographic, and other types of descriptive information, such as work experience, educational history, gender, hobbies or preferences, location, and the like. User profile information may also store other information provided by the user, for example, images or videos. In certain embodiments, images of users may be tagged with identification information of users of the social networking system 130 displayed in an image. The user profile store 305 also maintains references to the actions stored in an action log 335 and performed on objects in the content store 315. The user profile store 305 also includes data in a user profile indicating whether a user corresponding to the user profile is currently logged into social networking system 130. Additionally, a user profile may include information received from the mobile device 105 identifying content accessed or viewed by the user via the mobile device 105. This allows the user profile to include information describing content viewed by the user, which may be used to subsequently select advertisements or other content for presentation to the user. In one embodiment, the content is associated with an advertiser identifier or other information allowing an advertiser to be determined from the content.

The edge store 310 stores the information describing connections between users and other objects on the social networking system 130 as edges. Some edges may be defined by users, allowing users to specify their relationships with other users. For example, users may generate edges with other users that parallel the users' real-life relationships, such as friends, co-workers, partners, and so forth. Other edges are generated when users interact with objects in the social networking system 130, such as expressing interest in a page on the social networking system 130, sharing a link with other users of the social networking system 130, and commenting on posts made by other users of the social networking system 130.

The edge store 310 also includes information about the edge, such as affinity scores for objects, interests, and other users. Affinity scores may be computed by the social networking system 130 over time to approximate a us-er's affinity for an object, interest, and other users in the social networking system 130 based on the actions performed by the user. Computation of affinity is further described in U.S. Patent Application No. 12/978,265, filed on December 23, 2010, which is hereby incorporated by reference in its entirety. Multiple interactions between a user and a specific object may be stored in one edge in the edge store 310, in one embodiment. For example, a user that plays multiple songs from Miles Davis' album, "Kind of Blue," may have multiple edges between the user and different songs, but a single edge between the user and an object for Miles Davis.

The content store 315 stores content items associated with a user profile, such as images, videos, and audio files. Content items from the content store 315 may be displayed when a user profile is viewed or when other content associated with the user profile is viewed. For example, displayed content items may show images or video associated with a user profile or show text describing a user's status. Additionally, other content items may facilitate user engagement by encouraging a user to expand his connections to other users, to invite new users to the system, or to increase interaction with the social networking system 130 by displaying content related to users, objects, activities, or functionalities of the social networking system. Examples of social networking content items include suggested connections or suggestions to perform other actions, media provided to, or maintained by, the social networking system 130 (e.g., pictures or videos), status messages or links posted by users to the social networking system 130, events, groups, pages (e.g., representing an organization or commercial entity), and any other content provided by or accessible via the social networking system 130.

In one embodiment, advertisement objects ("ad objects") are stored in the advertisement store 320; however, in other embodiments, ad objects may be stored in the content store 315. Ad objects may be received from one or more of advertisers 135 and the ad exchange 140. An ad object includes an advertisement and an associated bid amount and may also include targeting criteria specifying one or more characteristics of a user eligible to be presented the advertisement. The bid amount specifies an amount of compensation an advertiser 135 will provide the social networking system 130 for presenting the advertisement to a user, for receiving a user interaction with the advertisement, or based on any other suitable criteria. The bid amount may be used to determine an expected value to the social networking system 130 for presenting an advertisement to a user. For example, the bid amount specifies a monetary amount that the social networking system 130 receives from the advertiser if the advertisement is displayed and the expected value is determined by multiplying the bid amount by a probability of the advertisement being accessed.

In one embodiment, the social networking system 130 includes a grouping module 325 that retrieves targeting criteria from received ad objects. The grouping module 325 accesses information about users from the user profile store 305, the edge store 315 and/or the action log 335 to identify users satisfying one or more targeting criteria. In one embodiment, the grouping module 325 associates groups of users with targeting criteria satisfied by users in a group. A group of user profiles includes users that have some common characteristic satisfying targeting criteria associated with the group. For example, a group of users includes user identifiers associated with one or more users.

The grouping module 325 may associate one or more advertisements with a group of users to expedite selection of users satisfying targeting criteria associated with the advertisement. For example, the social networking system 130 retrieves targeting criteria from an advertiser to target one or more advertisements to users that have previously checked-in to a specified location. More generally, targeting criteria associated with advertisements may be used to identify any edge, action, characteristic or other information for identifying users to receive the advertisement. From the targeting criteria and accessed information, the grouping module 325 identifies groups of users having the characteristics specified by the targeting criteria (e.g., having performed the checkin action to the specified location). User identifiers associated with users satisfying the targeting criteria are included in the group of users, which may be associated with the targeting criteria or with the advertisement. In some embodiments, targeting criteria associated with an advertisement may not necessarily include objects. For example, to advertise for a local marathon, an advertisement may include targeting criteria to identify users that have previously ran a marathon.

The action logger 330 receives communications about user actions on and/or off the social networking system 130, and populates the action log 335 with information about user actions. Such actions may include, for example, adding a connection to another user, sending a message to another user, uploading an image, reading a message from another user, viewing content associated with another user, attending an event posted by another user, among others. In addition, a number of actions described in connection with other objects are directed at particular users, so these actions are associated with those users as well. These actions are stored in the action log 335.

Users may interact with various objects on the social networking system 130, including commenting on posts, sharing links, and checking-in to physical locations via mobile device 105, accessing content items in a sequence, or other interactions. Information describing these actions is stored in the action log 335. Additional examples of interactions with objects on the social networking system 130 included in the action log 335 include commenting on a photo album, enabling communications between users, becoming a fan of a musician, adding an event to a calendar, joining a group, becoming a fan of a brand page, creating an event, authorizing an application, using an application, and engaging in a transaction. Additionally, the action log 335 records a user's interactions with advertisements on the social networking system 130 as well as other applications operating on the social networking system 130.

The action log 335 may also store user actions taken on external websites. For example, an e-commerce website that primarily sells sporting equipment at bargain prices may recognize a user of a social networking system 130 through social plug-ins that enable the e-commerce website to identify the user of the social networking system 130. Because users of the social networking system 130 are uniquely identifiable, e-commerce websites, such as this sporting equipment retailer, may use the information about these users as they visit their websites. The action log 335 records data about these users, including webpage viewing histories, advertisements that were engaged, purchases made, and other patterns from shopping and buying.

The auction module 340 selects advertisements from the advertisement store 320 for presentation to a user, such as presentation via a client application 110 on the mobile device 105. In one embodiment, the auction module 340 accesses the advertisement store 320 and/or the grouping module 325 to identify candidate advertisements for presentation to a user. Alternatively, the auction module 340 receives requests for advertisements including a user identifier and identifies candidate advertisements from the advertisement store 320 associated with targeting criteria that the identified user satisfies. Based on bid prices associated with the candidate advertisements, the auction module 340 ranks the candidate advertisements and uses the ranking to select an advertisement for presentation by the mobile device 105. In various embodiments, the auction module 340 performs an internal auction, an external auction, or both, to select an advertisement to provide to the client application 110. For example, the auction module 340 determines expected values for the candidate advertisements based on their associated bid amounts and the likelihood of the identified user accessing various candidate advertisements.

In some embodiments, the auction module 340 may base its advertisement selections at least in part on other information about the user stored on the social networking system 130. For example, stored information about the user in the user profile store 305 indicates advertisers from which the user has previously viewed content. For example, a user profile identifies identifiers that a user has previously viewed, so accessing the user profile indicates content that the user has previously accessed. Additional information associated with a user by the social networking system may also be used in advertisement selection. For example, connections between the user and the advertiser may be retrieved from the edge store 310 and used as a factor in selecting advertisements. The auction module 340 may retrieve information from the action log 335, the content store 315, the advertisement store 320, some other module, or some combination thereof, to determine what content the user has previously viewed. For example, the retrieved information may indicate that the user had recently viewed content from Jack's Bow Hunting Supply. The auction module 340 would then weight any candidate advertisement from Jack's Bow Hunting Supply such that it has an increased probability of being selected (e.g., increases the expected value of the advertisement). Associating content that a user has accessed with the user's user profile allows a record of the content accessed by a user to be maintained, even when the content is accessed from sources that do not support cookies or other conventional tracking, such as applications on mobile devices 105. Similarly, if the user was associated with Jack's Bow Hunting Supply, candidate advertisements from Jack's Bow Hunting Supply would also have an increased weight.

In some cases, the user ID information 125 in a request for an advertisement is associated with multiple users. The auction module 340 may identify a subset of the users identified by the user ID information 125. In one embodiment, the auction module 340 selects the user identifiers from the request for an advertisement that are associated with a user currently logged into the social networking system 130 via the social networking application 120. For example, user profiles may be selected based on most recent logging into the social networking system 130, most frequently logging into the social networking system 130 or based on any other suitable criteria. Or, the auction module 340 may select user profiles from the received user ID information 125 based on connections between users in the received user ID information 125. For example, the auction module 340 selects users identified by the received user ID information 125 that are connected to a common object or that are included in the same group by the grouping module 325. For example, user ID information 125 specifies user A and user B, where user A is included in a group associated with targeting criteria X and Y, and user B is included in a group associated with targeting criteria Y and Z. In this example, the auction module 340 associates a group including targeting criteria Z with the user ID information 125. In other embodiments, the auction module 340 identifies user profiles associated with each user identifier included in the user ID information 125.

If a request for an advertisement includes one or more request parameters, the auction module 340 applies the request parameters to filter the candidate advertisements before ranking the candidate advertisements. A request parameter may specify, for example, a parameter that a candidate advertisement has not been previously provided to the client application 110, a specified size of the candidate advertisement, a threshold number of times the candidate advertisement has been provided to the client application 110, a threshold expected value associated with the candidate advertisement, content of the candidate advertisement, or some combination thereof.

If the user identified by the user ID information 215 satisfies targeting criteria for multiple advertisements, auction module 130 may select specific targeting criteria and rank the advertisements associated with the selected targeting criteria. Auction module 130 may select which targeting criteria to select based on characteristics of the advertisements associated with the targeting criteria. For example, targeting criteria associated with advertisements having the highest average expected value, having the highest or lowest frequency of display or any other applicable characteristics may be selected. In other embodiments, auction module 130 may conduct auctions including ads without limiting the advertisements included in the auction.

Social context module 345 identifies social context information associated with a user identified by the user ID information 125 for inclusion in a selected advertisement. For example, social context module 345 retrieves data from the user profile store 305 to determine if a user associated with the user ID information 125 is currently logged into the social networking system 130. If the user is logged in, the social context module 345 identifies users connected to the user from the user profile store 305 and/or the edge store 310 and identifies actions or characteristics of the users connected to the user from the user profile store 305 or from the action log 335. FIG. 1B includes an example of embedded social context information, specifically, "Brian and Dave like Robin's Archery Supply" embedded in the targeted advertisement 150.

Communications module 350 is configured to transmit and receive data, via network 220, from social networking system 130 to a mobile device 105 and/or to another component. The communications module 350 receives requests for advertisements from one or more requesting mobile devices 105 and communicates information from the requests for advertisements to components of the social networking system 130. Additionally, communications module 350 sends an advertisement selected by the social networking system 130, as well as embedded social context information, to the requesting mobile device 105 via the network 220.

In some embodiments, the communications module 350 may be configured to encrypt user ID information 125 and provide the encrypted user ID information 125 to the mobile device 105 (e.g., when a user logs into the social networking system 130). In this embodiment, the communications module 350 is also configured to decrypt any encrypted user ID information 125 received from the mobile device 105 (e.g., as part of an advertisement request) before providing the decrypted user ID information 125 to other components of the social networking system 130. For example, the communications module 350 may contain a hash table that may be used to decrypt the encrypted user ID information 125.

### Selection of Advertisements for Mobile Device Users

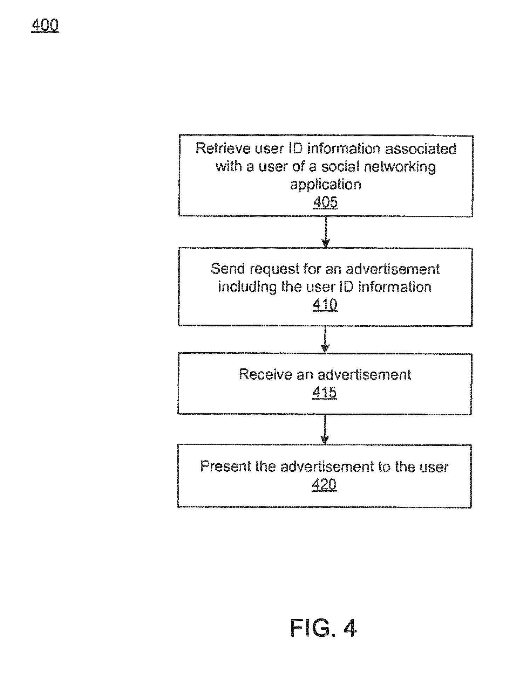

FIG. 4 is a flow chart of one embodiment of a process 400 for retrieving a targeted advertisement from a social networking system 130 using a mobile device 105. A client application 110 operating on the mobile device retrieves 405 user ID information 125 associated with a user of the social networking application 120 operating on the mobile device 105 from a shared memory location in the mobile device 105. Hence, the social networking application 120 stores the user ID information 125 in the shared memory location of the mobile device 105, so that other applications, such as the client application 110, may retrieve the user ID information 125. In some embodiments, when a user logs into the social networking system 130 using the social networking application 120, the social networking application 120 retrieves the user ID information 125 from the social networking system 130. The user ID information 125 is then stored in the shared memory location. Additionally, in some embodiments, the client application 110 includes the advertising application 115 that retrieves 405 the user ID information 125 from the shared memory location.

Based on the retrieved user ID information 125, the client application 110 sends 410 a request for an advertisement including the retrieved user ID information 125 to the social networking system 130.

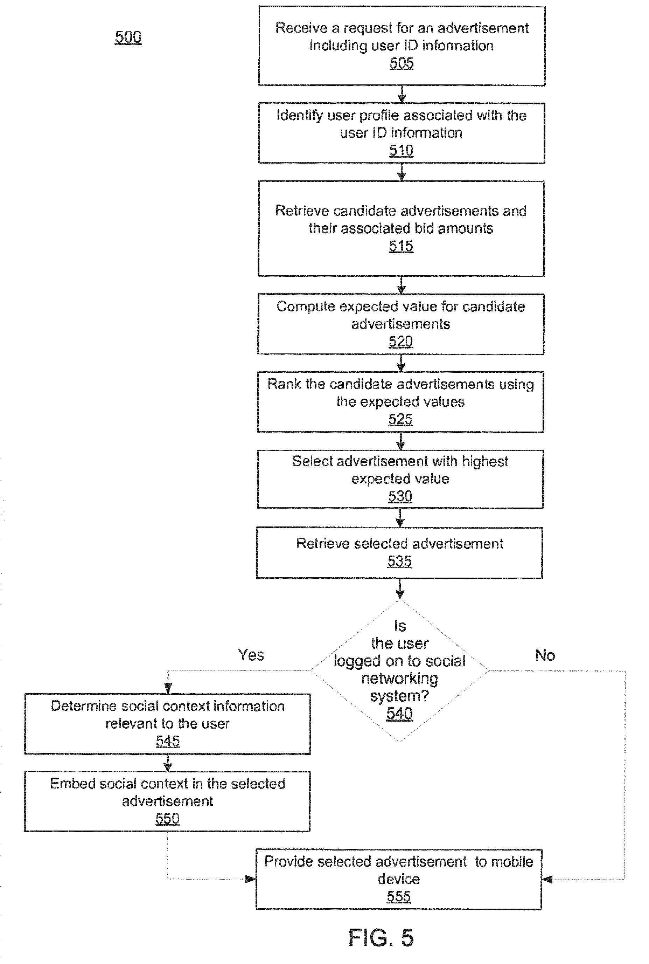

As discussed below with reference to FIG. 5, the social networking system 130 processes the request for an advertisement and selects an advertisement for presentation via the client application 110. For example, the social networking system 130 may base the selection on targeting criteria associated with advertisements stored by the social networking system, and/or information about the user stored by the social networking system 130. In some embodiments, the stored information about the user indicates that the user has previously viewed content from, or is associated with, the candidate target advertisements' advertisers.

The selected advertisement is received 415 by the client application 110, or by the advertising application 115 and is presented 420 to the user via the client application 110. For example, the client application 110 displays the targeted advertisement to the user, plays audio associated with the selected targeted advertisement, etc.

FIG. 5 illustrates a flowchart of one embodiment of a process 500 for selecting an advertisement for presentation to a social networking system user via a mobile device 105. The social networking system 130 receives 505 an request for an advertisement from the client application 110 operating on the mobile device 105. The request for an advertisement includes user ID information 125 associated with a user of the social networking application 120 that was retrieved from a shared memory location of the mobile device 105. In some embodiments, the request for an advertisement may also include one or more request parameters, as further described above.

Based on the user ID information 125, the social networking system 130 identifies 510 a user profile associated with a user identifier in the user ID information 125. Based on information in the identified user profile and targeting criteria associated with ad objects in the advertisement store 320, the social networking system 130 retrieves 515 candidate advertisements, as well as bid prices associated with the candidate advertisements. As discussed above, the request for an advertisement may contain one or more request parameters, and the candidate advertisements may be filtered based on the request parameters.

An expected value for each of the candidate advertisements is computed 520. For example, the expected value of a candidate advertisement is the product of the candidate advertisement's bid amount by a probability of the candidate advertisement being accessed. To estimate the probability that a user will click on a candidate advertisement, the social networking system 130 may use the user's affinities for targeting criteria associated with the candidate advertisements or with other objects associated with the candidate advertisements.

Data about advertisers associated with the candidate advertisements may also be used when computing 520 the expected value of candidate advertisements. For example, the number of users targeted by the advertiser may affect the bid price, allowing candidate ads from an advertiser having a lower bid amount but a larger group of potentially accessible users to have a higher expected value than candidate ads from an advertiser having a higher bid amount but a smaller group of potentially accessible users. Alternatively, the expected value is weighted by the amount of common data in the targeting criteria and a user's profile, so that candidate ads more likely to be accessed by the user have a higher expected value. For example, if the targeting criteria include 8 elements and a user profile matches 4 elements of the targeting criteria the expected value may be weighted by the ratio of the number of target criteria elements matching the user profile to the number of target criteria, or 0.5 in this example. In other embodiments, different functions of the targeting criteria and user profile may be used to weight the expected value.

In some embodiments, the expected values of the candidate advertisements may be adjusted based on whether the user has previously viewed content from advertisers associated with the candidate advertisements, is associated with the advertisers associated with the candidate advertisements via the social networking system 130, or has otherwise interacted with the candidate advertisements or other objects associated with advertisers associated with the candidate advertisements. Data describing user interactions with content and/or advertisers may be retrieved from the action log 335, the content store 315, the advertisement store 320, some other module, or any combination thereof.

Based at least in part on the expected values, the candidate advertisements are ranked 525. From the ranking, a candidate advertisement is selected 530. For example, the candidate advertisement having the highest expected value is selected 530. The selected candidate advertisement is retrieved 535 from the advertisement store 320, from an advertisement exchange 140 or from another source.

The social networking system 130 then determines 540 if the user is logged on to the social networking system 130. If the user is not logged onto the social networking system 130, the selected advertisement is provided 555 to the mobile device 105 from which the request for an advertisement was received 505. However, if the user is logged into the social networking system 130, the social networking system 130 determines 545 social context information that is relevant to the user. For example, the social networking system 130 determines 545 actions taken by other users of the social networking system 130 connected to the identified user with respect to content associated with the selected advertisement. The social context is embedded 550 in the selected advertisement, and the social context along with the selected advertisement is provided 555 to the mobile device 105 from which the request for an advertisement was received 505.

Using targeting criteria associated with advertisements and information associated with user profiles, the social networking system 130 may select an advertisement more likely to be of interest to a user. This increases the likelihood that the user will access the advertisement, causing the advertiser associated with the selected advertisement to compensate the social networking system 130, as well as increase the likelihood that the user will access the advertisement and benefit the advertiser. This ability to more specifically target advertisements based on characteristics of a user also allows the social networking system 130 to request a higher rate of compensation for providing advertisements relative to compensation for a typical non-targeted advertisement.

In case of mobile devices, the information items, can for example be emergency or product recall messages, which could warn possible previous buyers of faulty products. These emergency or product recall messages, with their negative connotations, represent targeted information items and therewith underlie almost the same user attention span restrictions as for example advertisements, with their positive connocations, do. Irrelevant information items should preferably not be displayed, as they dilute the user's attention span and maybe delay a fast user action once the need arises. This is true, regardless of the content of the information item, and applies to emergency messages as well as to advertisements. For the sake of clarity and as advertisements should hopefully be the more prevalent displayed information item, they are the exemplary information item.

### Summary

The foregoing description of the embodiments has been presented for the purpose of illustration; it is not intended to be exhaustive or to limit the disclosure to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the embodiments be limited not by this detailed description, but rather by any claims that issue on an application based hereon. Accordingly, the disclosure of the embodiments is intended to be illustrative, but not limiting, of the scope of the disclosure, which is set forth in the following claims.

## Claims

1. A method comprising:
retrieving, by an application running on a mobile device, user identification information from a local memory on the mobile device, the user identification information provided to the local memory by a social networking system application operating on the mobile device and associated with a social networking system, the user identification information associated with a user of the social networking system and used by the social networking application to retrieve information associated with the user;
sending a request for one or more information items to the social networking system, the request including the user identification information associated with the user; and
receiving one or more information items selected by the social networking system based at least in part on targeting criteria associated with information items stored by the social networking system and information about the user stored by the social networking system, the selected information items associated with one or more targeting criteria satisfied by the information about the user stored by the social networking system.

2. The method of claim 1, wherein the user identification information includes at least one request parameter for filtering candidate information items identified by the social networking system.

3. The method of claim 2, wherein a request parameter is selected from a group consisting of: a parameter that a candidate information item has not been previously provided to the client application, a specified size of the candidate information item, a threshold number of times the candidate information item has been provided to the application, a threshold expected value associated with the candidate information item, content of the candidate information item, and any combination thereof.

4. The method of any of claims 1 to 3, further comprising displaying the information item selected by the social networking system on the mobile device using the application running on the mobile device.

5. The method of any of claims 1 to 4, wherein the information item selected by the social networking system includes social context information associated with the user if the user is logged into the social networking system.

6. The method of any of claims 1 to 5, wherein the social context information associated with the user comprises an action performed by another user of the social networking system connected to the user, the action involving an object associated with the information item selected by the social networking system.

7. The method of any of claims 1 to 6, wherein the information about the user stored by the social networking system includes whether the user has previously viewed content associated with the received information item, preferably representing an user affinity, and the received information item is related to the viewed content.

8. The method of any of claims 1 to 7, wherein the information item is at least one of the following:
an advertisement;
an emergency message;
a product recall message.

9. The method of any of claims 1 to 8, wherein the information about the user stored by the social networking system includes data indicating an association between the user and a supplier of the information item, in particular an advertiser, associated with the received information item, in particular an advertisement.

10. One or more computer-readable non-transitory storage media embodying software that is operable when executed to perform a method according to any of claims 1 to 9.

11. A system comprising: one or more processors; and a memory coupled to the processors comprising instructions executable by the processors, the processors operable when executing the instructions to perform a method according to any of the claims 1 to 9.
